# EUROPEAN PATENT APPLICATION

(11) **EP 4 260 709 A1**
(43) Date of publication of application: **18.10.2023**
(21) Application number: 22382345.1
(22) Date of filing: 11.04.2022
(51) Int. Cl.: A23F 5/04, A23F 5/16

(54) **PROCESS FOR REDUCING ACRYLAMIDE FROM ROASTED COFFEE**

(71) Applicant: PATATAS FRITAS TORRES, S.L., 08160 Montmelo - Barcelona (ES)
(72) Inventor: Llagostera Español, Ramon, Esplugues de Llobregat (ES)
(74) Representative: Ponti & Partners, S.L.P

(57) **Abstract**

The present invention relates to a process for reducing acrylamide from roasted coffee.

## Description

### Field of the invention

The present invention relates to a process for reducing acrylamide from roasted coffee.

### Background

Coffee is one of the most popular drinks worldwide. It is obtained from the roasting and grinding of the beans of the coffee plant. For its production, a thermal treatment (torrefaction) is carried out, a process that provides the characteristic color and aromas. As a derivative of the torrefaction, an undesirable dangerous chemical by-product known as **acrylamide** is generated.

Already in Regulation (EEC) 315/93 of the Council, of February 8, 1993, which establishes community procedures in relation to contaminants present in food products, it was indicated that acrylamide was a contaminant and constituted a chemical danger in the food chain.

Subsequently, in Regulation (EU) 2017/2158 OF THE COMMISSION of November 20, 2017, which establishes mitigation measures and reference levels to reduce the presence of acrylamide in food, it was defined as: *"Acrylamide is an organic compound of low molecular weight and very soluble in water, which is formed from asparagine and sugars, components that appear naturally in certain foods when they are processed at temperatures generally above 120 °C and with low humidity levels. It is mainly formed in foods rich in carbohydrates, baked or fried foods, with raw materials containing their precursors, such* as *cereals, potatoes and coffee beans.".* Annex IV of said regulation indicated that for roasted coffee the maximum levels of presence of acrylamide in roasted coffee are 400 µg/kg.

The Spanish Agency for Food Safety and Nutrition even describes the effects of acrylamide as follows: *"After consumption, the gastrointestinal tract absorbs acrylamide, it is distributed to all organs and is metabolized. Glycidamide is one of the main metabolites resulting from this process.*

*Laboratory animals orally exposed to acrylamide are more likely to develop genetic mutations and tumors (in mammary glands, testes, and thyroid glands in rats, and in the Harderian and mammary glands, lungs, ovaries, skin, and stomach in mice, among others). Glycidamide is the most likely cause of these types of adverse effects in animals. Exposure* *to acrylamide can cause deleterious effects on the nervous system (including hindquarter paralysis), in prenatal and postnatal development, and male reproduction."*

Therefore, due to the danger of acrylamide obtained in the coffee roasting process, there is a need to find useful procedures for reducing its presence in the final product.

In order to solve this problem, the present inventors have developed a process, as described herein, which allows obtaining roasted coffee beans with a low concentration of acrylamide, much lower than that of roasted coffee usually found in commercial establishments.

### Summary of the invention

The present invention relates to a process for reducing acrylamide from roasted coffee as defined in the claims.

### Detailed description of the invention

The present invention relates to a process for reducing acrylamide from roasted coffee, comprising the steps of:
a) obtaining natural green coffee beans;
b) hydrating the coffee beans from step a);
c) performing an electroporation of the hydrated coffee beans from step b);
d) immersing the coffee beans in water at a temperature between 20 and 35 °C;
e) extracting the coffee beans from water;
f) performing a roasting of the extracted coffee beans by means of vacuum with microwaves.

The hydration step (b) is carried out so that the coffee beans have greater efficiency in subsequent treatments. In particular, it allows tissues to be more conductive. In a preferred embodiment, said hydration step is carried out by immersion in water for 12 to 16 hours, preferably 12 hours. The amount of water must be sufficient to cover completely the green coffee beans and that they remain immersed at all times, even once the beans are hydrated. No particular temperature condition is needed and it can be normally carried out at room temperature.

The step (c) consists of the electroporation of the coffee beans after they have been hydrated in water. Using this technology, through the application of an external electric field, it is possible to permeabilize the membranes of plant cells. In this way, pores are generated in the cell membranes through which the passage of macromolecules, in particular sugars, occurs. This electroporation step is carried out in a device called electroporator, by introducing the hydrated beans in step (b) once they have been extracted from the water. This device produces high voltage pulses, causing an electrical current, which is passed through the tissues of the coffee beans. This step is usually performed with the following parameters:
Applied voltage: 5 to 10 kV, preferably 8 kV
Pulse wavelength: 10 to 50 µS, preferably 25 µS
Pulse frequency: 50 to 100 Hz, preferably 100 Hz
Number of pulses: 500 to 2000, preferably 800 units per treatment
Total treatment energy: 1 to 3 kV/cm, preferably 1.60 kV/cm.

Once step (c) of electroporation has been applied, the coffee beans are immersed again in water at a temperature between 45 and 55 °C (step d). Preferably, said immersion is carried out for 15-20 minutes. Through this step it is possible to wash the sugars ("blanching"). The container in which the washing is carried out is subjected to agitation and a renewal of water in the container is carried out in order to allow the circulation of the sugars from the inside of the cells to the water that acts as a solvent. That is, sugars are released from inside the cells and are dissolved in water.

Once the beans have been extracted from the water (step e), roasting (step f) of the obtained coffee beans is carried out. In this step, microwave vacuum dehydration equipment is employed. Consequently, said torrefaction (roasting) is carried out under vacuum (23-25 Thorr (in the SI system 3066.41-3333.05 Pa)). By reducing atmospheric pressure, the boiling point of water decreases and allows the torrefaction process to be carried out at temperatures lower than those usually employed in the roasting process. This lowering of the roasting temperature surprisingly makes it possible to substantially reduce the formation of acrylamide in the roasted beans. In the present invention, the temperature at the end of the torrefaction step is 160°C.

It should be noted that each of the preferred or non-preferred embodiments within each step can be independently combined with any of the preferred or non-preferred embodiments of the other steps of the process of the present invention.

The present invention will now be illustrated by means of an example which in no case will be construed as limiting the invention.

### Example

### Ingredients:

- Green coffee with origin Nicaragua (for applying the process of the invention)
- Commercial roasted coffee beans

### Hydratation step:

The green coffee beans were placed in a container and covered with water at room temperature for 12 hours. The amount of water must be sufficient to cover the green coffee beans completely and that they remain immersed at all times, even once the beans are hydrated.

### Electroporation Step:

Once the coffee beans are hydrated, they are removed from water and placed in batches in a high-voltage electrical pulse electroporation chamber.

The conditions used for the electroporation of the membranes are the following:

| | |
|---|---|
| Applied voltage | 8kV |
| Pulse wavelength | 25µS |
| Pulse frequency | 100 Hz |
| Number of pulses | 800 |
| Total treatment | 1.60 kV/cm |

Once the grains were electroporated, they were kept in trays, draining off excess water.

### Sugar Washing Step (Blanching):

The green coffee beans were placed in a container and covered with water at 50 °C for 15 minutes. The amount of water should be enough to cover the coffee beans. To favor the washing of sugars, the grains were kept under stirring throughout the treatment.

### Vacuum Torrefaction step with microwaves:

For roasting the grains, a microwave vacuum dehydration equipment is used. The working conditions of the equipment are as follows:

| Sample weight | Thermal treatment | Vacuum conditions | Temperature |
|---|---|---|---|
| 1 kg | 1500 W | 3,200 Pa | 125 °C |

**Results:**

| SAMPLE | ACRYLAMIDE* |
|---|---|
| Roasted coffee available in a commercial establishment subjected to roasting with hot air at 195°C (usual process) | 200 µg/kg |
| Roasted coffee with process according to the present invention | 22 µg/kg |

| | |
|---|---|
| * Acrylamide was measured by liquid chromatography-mass spectrometry according to regulation (EU) 2017/2158 | |

### Conclusions:

Comparing the analytical results of the acrylamide present in roasted coffee beans obtained in the establishment, and the coffee obtained by means of the process of the present invention, it can be seen that the performed treatments allow us to achieve a significant reduction in the acrylamide concentration.

## Claims

1. A process for reducing acrylamide from roasted coffee, comprising the steps of:
a) obtaining natural green coffee beans;
b) hydrating the coffee beans from step a);
c) performing an electroporation of the hydrated coffee beans from step b);
d) immersing the coffee beans in water at a temperature between 20 and 35 °C;
e) extracting the coffee beans from water;
f) performing a roasting of the extracted coffee beans by means of vacuum with microwaves.

2. The process according the claim 1, wherein step b) is carried out for a time of 12 to 16 hours

3. The process according the claim 1 o 2, wherein the electroporation in step c) is performed with the following conditions:
Applied voltage: 5 to 10 kV
Pulse wavelength: 10 to 50 µS
Pulse frequency: 50 to 100 Hz
Number of pulses: 500 to 2000
Total treatment energy: 1 to 3 kV/cm

4. The process according to any of claims 1 a 3, wherein step d) is carried out at a temperature between 45 and 55 °C.

5. The process according to any of claims 1 a 4, wherein step d) is carried out for 15-20 minutes.

6. The process according to any of claims 1 a 5, wherein the highest temperature in step f) is 160 °C.
